# EUROPÄISCHE PATENTSCHRIFT

(11) **EP 1 749 767 B1**
(45) Veröffentlichungstag und Bekanntmachung des Hinweises auf die Patenterteilung: **10.10.2012**
(21) Anmeldenummer: 06118227.5
(22) Anmeldetag: 01.08.2006
(51) Int. Cl.: B28C 7/00, B65G 53/00, C04B 7/47

(54) **Verfahren und Vorrichtung zum Kühlen von Zement oder zementartigen Pulvern**
Method and apparatus for cooling of cement or cementitious powders
Procédé et dispositif pour refroidir du ciment ou des materiaux cimentaires pulvérulents

(30) Priorität: 03.08.2005 DE 102005037081
(43) Veröffentlichungstag der Anmeldung: 07.02.2007
(73) Patentinhaber: Messer Group GmbH, 65812 Bad Soden (DE); Schwenk Transportbeton GmbH & Co. KG, 89077 Ulm (DE)
(72) Erfinder: Klingebiel, Ralf, Blumenscheinweg 7 Ulm 89077 (DE); Tauchmann, Jens, Angermunder Str. 34 47269, Duisburg (DE)
(74) Vertreter: Münzel, Joachim R.

(56) Entgegenhaltungen:
- WO-A-03/004954
- DE-A1- 4 010 045
- DE-A1-102004 062 670

## Beschreibung

Die Erfindung betrifft ein Verfahren sowie eine Vorrichtung zum Kühlen von Zement oder zementartigen Pulvern, bei dem der Zement oder das zementartige Pulver über eine Förderleitung in ein Silo eingespeist und mit einem Kühlmedium in thermischen Kontakt gebracht wird.

Bei der Herstellung von Frischbeton ist es häufig erforderlich, den dem Frischbeton beigemischten Feststoff, etwa Zement oder ein zementartiges Pulver, zu kühlen. Dabei wird der Feststoff üblicherweise mit Flüssigstickstoff als Kühlmedium in direkten Kontakt gebracht und dadurch gekühlt.

Ein solches Verfahren ist aus der DE 36 23 724 A1 bekannt. Beim Gegenstand dieser Druckschrift erfolgt die Zementkühlung dadurch, dass, zugleich mit der Zuführung des Zements in ein Vorratssilo über einen Einfüllstutzen, über eine separate Zuleitung flüssiger Stickstoff in das Zementsilo eingesprüht wird. Beim Kontakt mit dem Zement verdampft der Stickstoff und wird als Gas mit dem Abluftstrom ausgetragen.

Mit diesem Verfahren kann jedoch eine ausreichende Kühlung nicht erzielt werden, da bei der getrennten Zuführung von Zement und Stickstoff ein nur unzureichender Wärmekontakt zwischen beiden Stoffen hergestellt wird. Ein großer Teil des eingesetzten Stickstoffs entweicht damit ungenutzt, und das kalte Slickstoffabgas kann leicht eine Vereisung eines dem Silo zugeordneten Entstaubungsfilters bewirken.

Ferner ist in der US-PS 44 79 362 ein Verfahren zur Kühlung von Zement bekannt, bei dem Zement pneumatisch über eine Förderleitung in ein Silo eingespeist und dabei Flüssigstickstoff über einen in der Zementleitung angeordneten Stutzen eingeleitet wird. Nachteilig bei diesem Verfahren ist, dass auch hier kein homogener Wärmeaustausch zwischen Zement und Stickstoff hergestellt und somit die Enthalpie des Stickstoffs nur unzureichend genutzt wird.

Aus der DE 40 10 045 A1 ist ein Verfahren zur Kühlung einer pulverförmigen Substanz, insbesondere Zement, beim pneumatischen Einspritzen der Substanz in ein Silo bekannt. Die Substanz wird über eine Förderleitung in ein Silo gefördert, in der eine Venturidüse eingebaut ist. Ober ein Mischrohr in der Venturidüse wird flüssiger Stickstoff in den Förderstrom der Substanz eingedüst. Die mit dem Stickstoff vermischte und dadurch gekühlte Substanz wird anschließend zum Silo gefördert und fällt dort in den Lagerbereich des Silos hinab, während der Stickstoff durch den dem Silo zugeordneten Entstaubungsfilter entweicht. Als besonders vorteilhaft wird bei diesem Gegenstand angesehen, die Venturidüse bereits am Anfang der Förderleitung, im Bereich des Zulieferfahrzeugs vorzusehen, um eine möglichst lange Mischstrecke in der Förderleitung zu gewährleisten.

Nachteilig bei diesem Verfahren ist jedoch, dass es beim Auftreten des flüssigen Stickstoffs auf die Substanz zum Phasenübergang des Stickstoffs und damit zu einer hohen Gasentwicklung an der Kontaktstelle kommt. Dies führt zu einer kurzzeitigen Sperrung des Förderstroms der Substanz. Durch den Stopp des Förderstroms baut sich die Gasblase in der Förderleitung ab und der Feststoffstrom wird wieder aufgenommen, um wiederum einen Kontakt von Substanz mit Flüssigstickstoff und damit eine starke Gasentwicklung in der Förderleitung auszulösen. Dieser Vorgang wiederholt sich laufend und führt in der Folge zu einem impulsartigen Abblasen von Stäuben über die Entstaubungseinrichtung des Lagersilos. Hierdurch geht Substanz verloren und es kommt zu einer nicht unerheblichen Belastung von Beschäftigten und Umwelt.

Aufgabe der Erfindung ist daher, ein Verfahren zum Kühlen von Zement oder zementartigen Pulvern bereit zu stellen, das sehr effizient arbeitet und die Belastung von Mensch und Umwelt reduziert.

Diese Aufgabe mit einem Verfahren mit den Merkmalen des Anspruchs 1 gelöst.

Nach dem erfindungsgemäßen Verfahren wird das Kühlmedium und der Zement bzw. der zementartige Stoff an einer in das Silo einmündenden Zweistoffdüse in das Silo eingedüst und in einem Mischbereich der Zweistoffdüse vermischt. Beide Stoffströme kommen also erst unmittelbar an der in das Silo einmündenden Düse in Wärmekontakt. Die Mischung kann dabei, je nach Aufbau der Düse, bereits im Düseninnern beginnen oder vollständig außerhalb der Düse erfolgen. Die Durchmischung beider Stoffströme, und damit auch der Phasenübergang des Kühlmediums, findet also zumindest zu einem wesentlichen Teil erst außerhalb der Düse und damit der Förderleitung statt. Dadurch werden Gasentwicklungen innerhalb der Förderleitung, die bei den Gegenständen nach dem Stande der Technik zu pulsertigen Störungen des Stoffstroms durch die Förderleitung führen, zuverlässig vermieden. Der Feststoff wird sehr gleichmäßig in das Silo befördert. Zugleich werden die Stoffe so intensiv miteinander vermischt, dass eine gute Wärmeübertragung gewährleistet und die Enthalpie des Kühlmediums gut genutzt wird.

Eine bevorzugte Ausführungsform der Erfindung sieht vor, dass die Zweistoffdüse derart ausgebildet ist, dass ein Stoffstrahl des Zements bzw. des zementartigen Stoffs beim Austritt aus der Zweistoffdüse innerhalb eines Kühlmediumsstrahls aufgenommen ist. Eine solche Ausbildung als Ringspaltdüse führt dazu, dass der Förderstrahl des Zements bzw. des zementartigen Pulvers für eine gewisse Zeitdauer innerhalb des Kühlmediumsstrahl gehalten wird und es so zu einer relativ langsamen Vermischung beider Stoffstrahlen kommt.

Zweckmäßigerweise werden die Volumenströme von Zement bzw. zementartigem Stoff und Kühlmedium in Abhängigkeit von gemessenen Werten der Temperatur des Zements bzw. des zementartigen Stoffs und/oder der Staubbeladung eines aus dem Silo abgeführten Abgasstromes nach einem vorgegebenen Programm geregelt. Hierdurch können die Stoffströme den jeweiligen Erfordernissen angepasst werden.

Die Aufgabe der Erfindung wird auch durch eine Vorrichtung mit den Merkmalen des Anspruchs 4 gelöst.

Die erfindungsgemäße Vorrichtung zum Kühlen von Zement oder zementartigen Pulvern, bei dem das Zement oder das zementartige Pulver über eine einen Vorratstank mit einem Silo verbindende Förderleitung eingespeist und mit einem aus einer Kühlmediumszuleitung herangeführten flüssigen Kühlmedium in thermischen Kontakt gebracht wird, zeichnet sich also dadurch aus, dass die Förderleitung und die Kühlmediumszuleitung mit einer in das Innere des Silos einmündenden Zweistoffdüse strömungsverbunden sind.

Die Förderleitung und die Kühlmediumszuleitung sind somit erst an der Zweistoffdüse, die in das Innere des Silos einmündet, miteinander verbunden. Die Stoffströme kommen erst an im Bereich der Düse miteinander in Kontakt. Dadurch wird einerseits eine gute Durchmischung der Stoffströme erzielt, zum anderen werden die aus dem Stand der Technik bekannten, durch einen Phasenübergang des Kühlmediums im Innern der Förderleitung verursachten pulsartigen Störungen beim Stofftransport durch die Förderleitung vermieden.

Besonders vorteilhaft ist daher auch der Einsatz einer außenmischenden Zweistoffdüse, bei der die Stoffströme erst vor der Düsenmündung miteinander in Kontakt kommen. Der durch den Kontakt mit dem zu kühlenden Feststoff verursachte Phasenübergang des Kühlmediums und die damit einhergehende Volumenvergrößerung findet damit praktisch vollständig außerhalb der Düse bzw. der Förderleitung statt.

Bevorzugt umfasst die Zweistoffdüse zwei im wesentlichen konzentrisch angeordnete Düsenaustritte, von welchen der innere Düsenaustritt mit der Förderleitung für den Zement bzw. den zementartigen Stoff und der äußere Düsenaustritt mit der Kühlmediumszuleitung strömungsverbunden ist. Der Feststoffstrahl des Zements bzw. des zementartigen Stoffs wird somit über eine gewisse Zeitdauer innerhalb des Kühlmediumsstrahls gehalten. Dadurch kommt es zu einer relativ langsamen aber wirkungsvollen Durchmischung beider Stoffstrahlen.

Um die Durchmischung beider Stoffstrahlen weiter zu verbessern, umfasst die Zweistoffdüse vorteilhafterweise eine Einrichtung zur Mischungsverstärkung. Dabei kann es sich beispielsweise um eine Einrichtung zur Drallerzeugung und/oder einen Konfusor handeln. Eine Einrichtung zur Drallerzeugung stabilisiert den gemeinsamen Strahl aus Feststoff und Kühlmedium, ein Konfusor verringert den Strömungsquerschnitt von zumindest einem der Stoffströme und erhöht dadurch die Geschwindigkeit des aus der Zweistoffdüse austretenden Strahls, stabilisiert diesen damit und verlängert so die Mischstrecke von Feststoff und Kühlmedium.

Eine besonders bevorzugte Ausgestaltung der Erfindung sieht vor, dass eine Regeleinrichtung die Volumenströme von Zement bzw. zementartigem Stoff und Kühlmedium in Abhängigkeit von der Temperatur des Zements bzw. des zementartigen Stoffs und/oder der Staubbeladung eines aus dem Silo abgeführten Abgasstromes regelt. Damit wird der Einsatz an Kühlmedium optimiert, der Feststoffaustrag aus dem Silo minimiert und damit die Belastung von Mensch und Umwelt reduziert.

Als bevorzugtes Kühlmedium kommt Stickstoff in Betracht, alternativ Kohlendioxid, das kalt im gasförmigen Zustand oder unter Druck im flüssigen Zustand bei Umgebungstemperatur herangeführt wird.

Anhand der Zeichnungen soll ein Ausführungsbeispiel der Erfindung näher erläutert werden. In schematischen Ansichten zeigen:
Fig. 1: Eine erfindungsgemäße Vorrichtung zum Kühlen von Zement und
Fig. 2: Eine in der Vorrichtung nach Fig. 1 eingesetzte Zweistoffdüse zum Eintragen von Zement und Stickstoff.

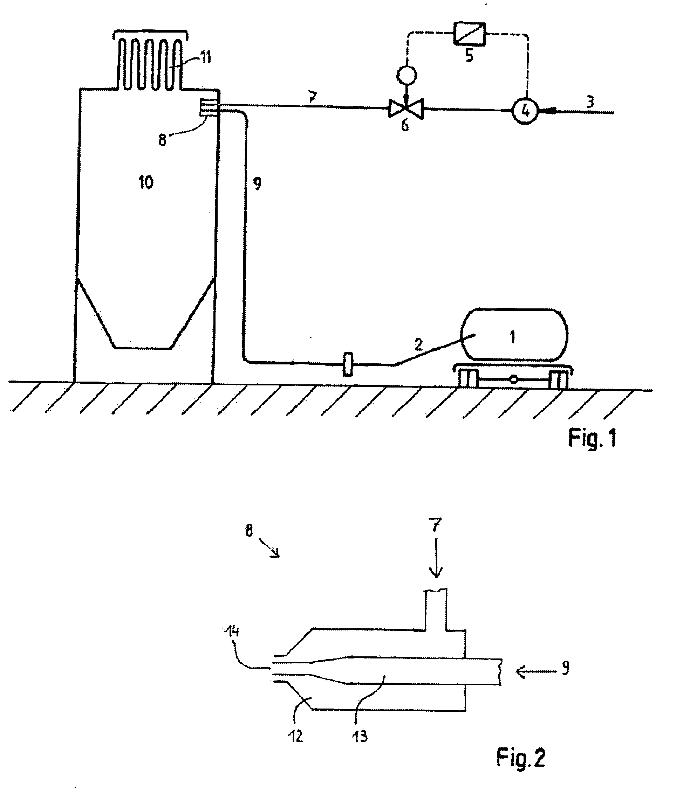

Bei der erfindungsgemäßen Vorrichtung nach Fig. 1 wird Zement aus einem Lieferfahrzeug 1 pneumatisch in ein Silo 10 eingespeist. Am Silokopf ist ein Entstaubungsfilter 11 angeordnet. Die Einspeisung erfolgt vom Lieferfahrzeug 1 über eine Zuleitung 2, die über einen Anschluss mit einer Förderleitung 9 verbunden ist. Die Förderleitung mündet an einer Zweistoffdüse 8 in das Silo 10 ein. Ein Kühlmedium, im Ausführungsbeispiel flüssiger Stickstoff, wird über eine wärmeisolierte Leitung 3 durch einen Durchflussmesser 4 zu einem Steuerventil 6 geführt, das mittels einer Steuereinheit 5 geregelt wird. Die Steuereinheit 5 steht in hier nicht gezeigter Weise mit einem Sensor zur Erfassung der Temperatur des im Silo 10 gelagerten Zements und/oder einem Sensor zur Erfassung des Feststoffanteils in der der dem Entstaubungsfilter 11 zugeführten Abluft in Datenverbindung und ermöglicht so eine in Abhängigkeit von vorgegebenen Werten der Zementtemperatur bzw. des Feststoffanteils geregelte Zuführung des Flüssigstickstoffs.

Die in Fig. 2 dargestellte Zweistoffdüse 8 ist als außenmischende Düse ausgebildet und umfasst zwei konzentrisch zueinander angeordnete Stoffzuführungen 12, 13, die in einer gemeinsamen Düsenmündung 14 ausmünden und deren Strömungsquerschnitte sich zur Düsenmündung 14 hin verjüngen. In die äußere Stoffzuführung 12 mündet seitlich die Flüssigstickstoffleitung 7 ein und zwar derart, dass der Flüssigstickstoff exzentrisch zur Längsachse der Zweistoffdüse 8 in die Stoffzuführung 12 einströmt. Die innere Stoffzuführung steht mit der Förderleitung 9 in Strömungsverbindung.

Beim Betrieb der Vorrichtung wird Zement aus dem Lieferfahrzeug 1 pneumatisch über die Zuleitung 1 und die Förderleitung 9 zur Zweistoffdüse 8 gefördert und durch die Stoffzuführung 13 geführt. Über die Flüssigstickstoffleitung 7 gelangt eine genau dosierte Menge Stickstoff vom Steuerventil 6 in die Stoffzuführung 12 der Zweistoffdüse 8. Beim Austritt beider Stoffströme aus der Zweistoffdüse 14 im Innem des Silos 10 führt diese Anordnung zu einem Strahl aus Zementpulver, der radial von einem Stickstoffstrahl umschlossen ist. Im Außenbereich der Zweistoffdüse 8 kommen die Stoffströme des Zements und des Stickstoffs in Kontakt und vermischen sich zumindest teilweise. Dabei kühlt sich der Zement ab, während der Stickstoff verdampft. Die exzentrische Zuführung des Flüssigstickstoffs in die Stoffzuführung 12 führt zu einer rotierenden Bewegung des Flüssigstickstofistroms um die Längsachse der Zweistoffdüse 8 innerhalb der Stoffzuführung 12 und damit zu einer in sich rotierenden Bewegung des Stickstoffstrahls im Außenbereich der Zweistoffdüse 8. Durch diese Rotationsbewegung sowie durch die aufgrund der Querschnittsverjüngung der beiden Stoffzuführungen 12,13 hervorgerufene Vergrößerung der Strahlgeschwindigkeiten werden die Stoffstrahlen stabilisiert und somit die Mischstrecke, innerhalb der der Zement mit dem Stickstoff in Kontakt steht, verlängert. Auf diese Weise wird eine gute Wärmeübertragung vom Stickstoff auf den Zement gewährleistet, ohne dass es zu pulsartigen Störungen der Zementzufuhr kommt.

Anstelle von Stickstoff kann beispielsweise auch Kohlendioxid als Kühlmedium eingesetzt werden, das im flüssigen Zustand zur Zweistoffdüse transportiert und in der Zweistoffdüse oder vor deren Mündung unter Kälteentwicklung entspannt wird. In diesem Fall ist anstelle der wärmeisollerten Leitung 7 eine Druckleitung vorgesehen, die den Transport von flüssigem Kohlendioxid bei Umgebungstemperatur ermöglicht.

### Bezugszeichenliste

- 1.: Lieferfahrzeug
- 2.: Zuleitung
- 3.: Leitung
- 4.: Durchflussmesser
- 5.: Steuereinheit
- 6.: Steuerventil
- 7.: Flüssigstickstoffleitung
- 8.: Zweistoffdüse
- 9.: Förderleitung
- 10.: Silo
- 11.: Entstaubungsfilter
- 12.: äußere Stoffzuführung
- 13.: innere Stoffzuführung
- 14.: Düsenmündung

## Patentansprüche

1. Verfahren zum Kühlen von Zement oder zementartigen Pulvern, bei dem der Zement oder das zementartige Pulver über eine Förderleitung (9) in ein Silo (10) eingespeist und mit einem Kühlmedium in thermischen Kontakt gebracht wird,
**dadurch gekennzeichnet,**
**dass** das Kühlmedium und der Zement bzw. der zementartige Stoff an einer in das Silo (10) einmündenden Zweistoffdüse (8) in das Silo (10) eingedüst und in einem Mischbereich der Zweistoffdüse (8) vermischt werden.

2. Verfahren nach Anspruch 1, **dadurch gekennzeichnet, dass** die Zweistoffdüse (8) derart ausgebildet ist, dass ein Stoffstrahl des Zements bzw. des zementartigen Stoffs beim Austritt aus der Zweistoffdüse (8) innerhalb eines Kühlmediumsstrahls aufgenommen ist.

3. Verfahren nach Anspruch 1 oder 2, **dadurch gekennzeichnet, dass** die Volumenströme von Zement bzw. zementartigem Stoff und Kühlmedium in Abhängigkeit von gemessenen Werten der Temperatur des Zements bzw. des zementartigen Stoffs und/oder der Staubbeladung eines aus dem Silo (10) abgeführten Abgasstromes nach einem vorgegebenen Programm geregelt werden.

4. Verfahren nach einem der vorhergehenden Ansprüche, **dadurch gekennzeichnet, dass** als Kühlmedium Stickstoff oder Kohlendioxid zum Einsatz kommt.

5. Vorrichtung zum Kühlen von Zement oder zementartigen Pulvern, bei dem das Zement oder das zementartige Pulver über eine einen Vorratstank (1) mit einem Silo (10) verbindende Förderleitung (9) eingespeist und mit einem aus einer Kühlmediumszuleitung (7) herangeführten flüssigen Kühlmedium in thermischen Kontakt gebracht wird,
**dadurch gekennzeichnet,**
**dass** die Förderleitung (9) und die Kühlmediumszuleitung (7) mit einer in das Innere des Silos (10) einmündenden Zweistoffdüse (8) strömungsverbunden sind.

6. Vorrichtung nach Anspruch 5, **dadurch gekennzeichnet, dass** es sich bei der Zweistoffdüse (8) um eine außenmischende Düse handelt.

7. Vorrichtung nach Anspruch 5 oder 6, **dadurch gekennzeichnet, dass** die Zweistoffdüse (8) zwei im wesentlichen konzentrisch angeordnete Düsenaustritte umfasst, von welchen der innere Düsenaustritt mit der Förderleitung (9) für den Zement bzw. den zementartigen Stoff und der äußere Düsenaustritt mit der Kühlmediumszuleitung (7) strömungsverbunden ist.

8. Vorrichtung nach einem der Ansprüche 5 bis 7, **dadurch gekennzeichnet, dass** die Zweistoffdüse (8) eine Einrichtung zur Mischungsverstärkung aufweist.

9. Vorrichtung nach Anspruch 8, **dadurch gekennzeichnet, dass** die Einrichtung zur Mischungsverstärkung eine Einrichtung zur Drallerzeugung und/oder einen Konfusor umfasst.

10. Vorrichtung nach einem der Ansprüche 5 bis 9, **dadurch gekennzeichnet, dass** eine Regeleinrichtung (5) die Volumenströme von Zement bzw. zementartigem Stoff und Kühlmedium in Abhängigkeit von der Temperatur des Zements bzw. des zementartigen Stoffs und/oder der Staubbeladung eines aus dem Silo (10) abgeführten Abgasstromes regelt.

## Claims

1. Method for cooling of cement or cementitious powders, in which the cement or cementitious powder is fed via a conveying line (9) into a silo (10) and is brought into thermal contact with a cooling medium, **characterized in that** the cooling medium and the cement or cementitious material are injected into the silo (10) at a two-component nozzle (8) issuing into the silo (10) and are mixed together in a mixing region of the two-component nozzle (8).

2. Method according to Claim 1, **characterized in that** the two-component nozzle (8) is designed in such a way that a material jet of the cement or of the cementitious material, when it emerges from the two-component nozzle (8), is accommodated within a cooling-medium jet.

3. Method according to Claim 1 or 2, **characterized in that** the volume flows of cement or cementitious material and of cooling medium are regulated according to the stipulated program as a function of measured values of the temperature of the cement or cementitious material and/or of the dust load of an exhaust gas stream discharged from the silo (10).

4. Method according to one of the preceding claims, **characterized in that** the cooling medium used is nitrogen or carbon dioxide.

5. Apparatus for cooling of cement or cementitious powders, in which the cement or cementitious powder is fed in via a conveying line (9) connecting a storage tank (1) to a silo (10) and is brought into thermal contact with a liquid cooling medium delivered from a cooling-medium supply line (7), **characterized in that** the conveying line (9) and the cooling-medium supply line (7) are flow-connected to a two-component nozzle (8) issuing into the interior of the silo (10).

6. Apparatus according to Claim 5, **characterized in that** the two-component nozzle (8) is an outside-mixing nozzle.

7. Apparatus according to Claim 5 or 6, **characterized in that** the two-component nozzle (8) comprises two essentially concentrically arranged nozzle outlets, of which the inner nozzle outlet is flow-connected to the conveying line (9) for the cement or cementitious material and the outer nozzle outlet is flow-connected to the cooling-medium supply line (7).

8. Apparatus according to one of Claims 5 to 7, **characterized in that** the two-component nozzle (8) has a device for mix intensification.

9. Apparatus according to Claim 8, **characterized in that** the device for mix intensification comprises a device for swirl generation and/or a confuser.

10. Apparatus according to one of Claims 5 to 9, **characterized in that** a regulating device (5) regulates the volume flows of cement or cementitious material and of cooling medium as a function of the temperature of the cement or cementitious material and/or of the dust load of an exhaust gas stream discharged from the silo (10).

## Revendications

1. Procédé de refroidissement de ciment ou d'une poudre de type ciment, dans lequel le ciment ou la poudre de type ciment sont introduits dans un silo (10) par l'intermédiaire d'un conduit de transport (9) et sont mis en contact thermique avec un fluide de refroidissement,
**caractérisé en ce que**
le fluide de refroidissement et le ciment ou la poudre de type ciment sont injectés dans le silo (10) par une tuyère (8) à deux matières qui débouche à l'intérieur du silo (10) et sont mélangés dans une partie de mélange de la tuyère (8) à deux matières.

2. Procédé selon la revendication 1, **caractérisé en ce que** la tuyère (8) à deux matières est conçue de telle manière qu'un jet de matière de ciment ou de poudre de type ciment est repris à l'intérieur d'un jet de fluide de refroidissement à la sortie de la tuyère (8) à deux matières.

3. Procédé selon les revendications 1 ou 2, **caractérisé en ce que** les débits volumiques de ciment ou de poudre de type ciment et de fluide de refroidissement sont régulés selon un programme prédéterminé en fonction de valeurs mesurées de la température du ciment ou de la poudre de type ciment et/ou en fonction de la charge en poussières d'un écoulement de gaz extrait du silo (10).

4. Procédé selon l'une des revendications précédentes, **caractérisé en ce que** comme fluide de refroidissement, il utilise de l'azote ou du dioxyde de carbone.

5. Dispositif de refroidissement de ciment ou d'une poudre de type ciment, dans lequel le ciment ou la poudre de type ciment sont introduits par l'intermédiaire d'un conduit de transport (9) qui relie une cuve de réserve (1) à un silo (10) et sont mis en contact thermique avec un fluide de refroidissement liquide provenant d'un conduit (7) de fluide de refroidissement,
**caractérisé en ce que**
le conduit de transport (9) et le conduit (7) de fluide de refroidissement sont reliés à écoulement à une tuyère (8) à deux matières qui débouche à l'intérieur du silo (10).

6. Dispositif selon la revendication 5, **caractérisé en ce que** la tuyère (8) à deux matières est une tuyère à mélange externe.

7. Dispositif selon les revendications 5 ou 6, **caractérisé en ce que** la tuyère (8) à deux matières comporte deux sorties disposées de manière essentiellement concentrique et dont la sortie intérieure est reliée à écoulement au conduit (9) de transport du ciment ou de la poudre de type ciment et la sortie extérieure est reliée à écoulement au conduit (7) de fluide de refroidissement.

8. Dispositif selon l'une des revendications 5 à 7, **caractérisé en ce que** la tuyère (8) à deux matières présente un dispositif d'intensification du mélange.

9. Dispositif selon la revendication 8, **caractérisé en ce que** le dispositif d'intensification du mélange comporte un dispositif de tourbillonnage et/ou un confuseur.

10. Dispositif selon l'une des revendications 5 à 9, **caractérisé en ce qu'**un dispositif de régulation (5) régule les débits volumiques de ciment ou de poudre de type ciment et de fluide de refroidissement en fonction de valeurs mesurées de la température du ciment ou de la poudre de type ciment et/ou en fonction de la charge en poussières d'un écoulement de gaz extrait du silo (10).
